# FASCICULE DE BREVET EUROPEEN

(11) **EP 0 786 290 B1**
(45) Date de publication et mention de la délivrance du brevet: **25.07.2001**
(21) Numéro de dépôt: 97400166.1
(22) Date de dépôt: 24.01.1997
(51) Int. Cl.: B05D 5/08, C09D 179/08

(54) **Procédé de formation d'un revêtement anti-adhésif sur un ustensile de cuisine en aluminium**
Verfahren zur Herstellung einer Anti-Haftbeschichtung auf ein Aluminiumküchengerät
Process for forming a non-stick coating onto aluminium cookware

(30) Priorité: 29.01.1996 FR 9600996
(43) Date de publication de la demande: 30.07.1997
(73) Titulaire: SEB S.A., 69130 Ecully (FR)
(72) Inventeur: Buffard, Jean-Pierre, Résidence le Lac, 73100 Aix Les Bains (FR); Gardaz, Claudine, 74150 Bloye (FR)
(74) Mandataire: Keib, Gérard

(56) Documents cités:
- EP-A- 0 669 384
- WO-A-91/02773
- WO-A-92/10309
- US-A- 4 177 320

## Description

La présente invention concerne un procédé d'obtention d'un revêtement anti-adhésif sur un ustensile culinaire en aluminium, tel que poêle ou casserole.

La plupart des revêtements anti-adhésifs sont à base de polytétrafluoréthylène (PTFE).

Pour que de tels revêtements adhèrent à la surface de l'aluminium, celle-ci fait l'objet habituellement d'une attaque acide qui permet de créer des microcavités favorisant l'adhérence du revêtement de PTFE ou de la création d'une rugosité de surface par traitement mécanique de 12 micromètres environ qui permet l'adhérence d'une couche primaire.

On connaît notamment selon la demande PCT WO 91/02773 un revêtement adhérant à un substrat en aluminium qui n'a subi aucun traitement chimique ou mécanique pour rendre sa surface rugueuse.

Le revêtement décrit dans cette demande PCT comprend une sous-couche, une couche primaire et une couche supérieure de finition.

La sous-couche est obtenue à partir d'une phase aqueuse renfermant un surfactant, de la silice, une résine polyamide-imide (PAI), du sulfure de polyphénylène ou du polyéther sulfone.

La couche primaire est obtenue à partir d'une dispersion aqueuse de polytétrafluoréthylène (PTFE) additionnée de résine polyamide-imide (PAI) et de copolymère de tétrafluoréthylène et de (propyl vinyl éther) (PFA).

La couche supérieure de finition est obtenue à partir d'une dispersion aqueuse de PTFE.

Les couches ci-dessus sont toutes appliquées sur le substrat par projection en phase aqueuse.

Après séchage, ces couches sont cuites dans un four pour fritter le revêtement.

L'application d'une composition pour sous-couche à l'état de dispersion aqueuse présente l'inconvénient de nécessiter une transformation de la phase organique de la résine PAI en une phase aqueuse et la présence de surfactants.

Le but de la présente invention est de proposer un procédé d'obtention d'un revêtement anti-adhésif présentant une excellente adhérence aux substrats en aluminium traités ou non traités mécaniquement ou chimiquement pour rendre leur surface rugueuse.

L'invention concerne ainsi un procédé d'obtention d'un revêtement anti-adhésif sur un ustensile culinaire en aluminium, le revêtement anti-adhésif comprenant une sous-couche directement appliquée sur l'aluminium, une couche primaire appliquée sur cette sous-couche et une couche supérieure de finition appliquée sur la couche primaire, la couche primaire étant obtenue à partir d'une dispersion aqueuse de polytétrafluoréthylène (PTFE) additionnée de résine polyamide-imide (PAI) et de copolymère de tétrafluoréthylène et de poly (propyl vinyl éther) (PFA), la couche supérieure de finition étant obtenue à partir d'une dispersion aqueuse de PTFE.

Suivant l'invention, ce procédé est donc caractérisé en ce que la sous-couche est obtenue à partir d'une résine de polyamide-imide (PAI) en solution dans un solvant organique.

Les essais ont montré de façon surprenante qu'une telle sous-couche renfermant un solvant organique adhérait aussi bien au substrat que la sous-couche appliquée en phase aqueuse de l'art antérieur.

Cette sous-couche ne nécessite pas une transformation complexe d'une phase organique en phase aqueuse en présence de surfactants et d'amines.

La sous-couche peut encore être obtenue à partir d'une solution de résine de polyamide-imide (PAI) et de sulfure de polyphénylène.

Le solvant organique utilisé dans la sous-couche est de préférence choisi parmi les composés suivants : N - méthylpyrrolidone (NMP), diméthylformamide (DMF), ou mélange NMP / xylène ou DMF / xylène.

La sous-couche peut encore renfermer des charges inertes, telles que pigments minéraux, paillettes métalliques, alumine, quartz.

La sous-couche du revêtement obtenue selon le procédé de l'invention présente une excellente adhérence à l'aluminium même si la surface de celui-ci n'a subi aucun traitement chimique ou physique autre qu'un dégraissage.

Selon une version de l'invention, les couches primaire et supérieure de finition peuvent être appliquées par sérigraphie ou par roller coating (enduction par rouleau).

Le procédé d'application d'un revêtement anti-adhésif par sérigraphie et les avantages s'y rapportant, ont été décrits dans le brevet français 2 689 037 au nom de SEB S.A.

Dans ce cas, les couches primaire et supérieure de finition renferment en outre un agent épaississant, tel qu'une résine acrylique.

On donne ci-après, un exemple de composition (en parties en poids) de la sous-couche du revêtement selon l'invention.
. Résine PAI (Polyamide imide) sèche 30
. N-méthylpyrrolidone 230
. xylène 0 - 10
. Pigment (minéral ou noir de carbone) 0 - 25
. Paillettes aluminium 0 - 40
. PPS (Sulfure de polyphénylène) 0 - 80

Les paillettes d'aluminium favorisent l'adhérence de la couche primaire sur la sous-couche ci-dessus. En fait, leur présence à la surface de la sous-couche lui confère une rugosité équivalente à celle d'un traitement mécanique et joue le rôle d'armature pour le revêtement final à la manière d'un traitement mécanique.

A cet effet, leurs dimensions ne doivent pas dépasser 25 micromètres.

La sous-couche ci-dessus peut être appliquée par projection sur un disque en aluminium simplement dégraissé ou par sérigraphie ou tout autre moyen conventionnel.

Cette sous-couche est ensuite séchée, pour éliminer le solvant organique.

La couche primaire et la couche supérieure de finition sont ensuite appliquées successivement par sérigraphie selon le procédé décrit dans le brevet français 2 689 037 ou par tout autre moyen conventionnel.

La couche primaire est constituée par une dispersion aqueuse de PTFE, additionnée d'une résine PAI, d'une dispersion de PFA et, dans le cas d'une application par sérigraphie ou roller coating, d'une résine acrylique.

La couche supérieure de finition appliquée, après séchage de la couche primaire, est constituée par une dispersion aqueuse de PTFE, de paillettes de mica, d'un pigment tel que du noir de carbone et, dans le cas d'une application par sérigraphie ou roller coating, d'un agent épaississant tel qu'une résine acrylique.

Après séchage de la couche supérieure, les trois couches sont cuites simultanément dans un four à environ 400°-420°C pendant 1 - 10 minutes.

Les essais montrent que le revêtement ainsi obtenu adhère parfaitement au support.

Lorsqu'un disque en aluminium est revêtu de ces trois couches par sérigraphie ou roller coating par exemple, il peut être formé après frittage en ustensile culinaire tel que poêle, casserole ou moule à gâteaux, sans altérer les caractéristiques d'adhérence au support du revêtement.

## Revendications

1. Procédé de formation d'un revêtement anti-adhésif sur un ustensile culinaire en aluminium, ledit revêtement comprenant une sous-couche directement appliquée sur l'aluminium, une couche primaire appliquée sur cette sous-couche et une couche supérieure de finition appliquée sur la couche primaire, la couche primaire étant obtenue à partir d'une dispersion aqueuse de polytétrafluoréthylène (PTFE) additionnée de résine polyamide-imide (PAI) et de copolymère de tétrafluoréthylène et de propyl vinyl éther (PFA), la couche supérieure de finition étant obtenue à partir d'une dispersion aqueuse de PTFE, caractérisé en ce que l'on réalise la sous-couche en appliquant sur l'aluminium une solution de résine de polyamide-imide (PAI) dans un solvant organique.

2. Procédé conforme à la revendication 1, caractérisé en ce que la sous-couche est obtenue à partir d'une solution de résine de polyamide-imide (PAI) et de sulfure de polyphénylène.

3. Procédé conforme à l'une des revendications 1 et 2, caractérisé en ce que le solvant organique est choisi parmi les composés suivants : N - méthylpyrrolidone, (NMP) diméthylformamide (DMF) ou mélange NMP / xylène ou DMF / xylène.

4. Procédé conforme à l'une des revendications 1 à 3, caractérisé en ce que la sous-couche renferme en outre des charges inertes.

5. Procédé conforme à la revendication 4, caractérisé en ce que les charges inertes sont choisies parmi des pigments minéraux, paillettes métalliques, alumine et quartz.

6. Procédé conforme à l'une des revendications 1 à 5, caractérisé en ce que la composition de la sous-couche, exprimée en parties en poids, est la suivante :
. Résine PAI (polyamide-imide)sèche 30
. N-méthylpyrrolidone 230
. xylène 0 - 10
. Pigment (minéral ou noir de carbone) 0 - 25
. Paillettes d'aluminium 0 - 40
. PPS (sulfure de polyphénylène) 0 - 80

7. Procédé conforme à l'une des revendications 5 et 6, caractérisé en ce que la sous-couche renferme des paillettes d'aluminium présentant des dimensions inférieures ou égales à 25 µm.

8. Procédé conforme à l'une des revendications 1 à 7, caractérisé en ce que la sous-couche est appliquée sur de l'aluminium qui n'a subi aucun traitement chimique ou physique autre qu'un dégraissage.

9. Procédé conforme à l'une des revendications 1 à 8, caractérisé en ce que les couches primaire et supérieure de finition sont appliquées par sérigraphie ou roller coating (enduction par rouleau).

10. Procédé conforme à la revendication 9, caractérisé en ce que les couches primaire et supérieure de finition renferment en outre un agent épaississant.

## Claims

1. A method of forming a non-stick coating on an aluminium kitchen utensil, said coating comprising an undercoat directly applied to the aluminium, a primary coat applied to the undercoat, and a top finishing coat applied to the primary coat, the primary coat being obtained from an acqueous dispersion of polytetrafluoroethylene (PTFE) mixed with polyamide-imide (PAI) resin and a tetrafluoroethylene and propyl vinyl ether (PFA) copolymer, the top finishing coat being obtained from an acqueous dispersion of PTFE, characterised in that the undercoat is made by applying to the aluminium a solution of polyamide-imide (PAI) resin in an organic solvent.

2. A method according to claim 1, characterised in that the undercoat is obtained from a solution of polyamide-imide (PAI) resin and polyphenylene sulphide.

3. A method according to claim 1 or 2, characterised in that the organic solvent is selected from among the following compounds: N-methyl pyrrolidone, (NMP) dimethyl formamide or NMP / xylene or DMF / xylene mixture.

4. A method according to any one of claims 1 to 3, characterised in that the undercoat also contains inert fillers.

5. A method according to claim 4, characterised in that the inert fillers are selected from mineral pigments, metal flakes, alumina and quartz.

6. A method according to any one of claims 1 to 5, characterised in that the composition of the undercoat in parts by weight is as follows:
| | |
|---|---|
| Dry PAI (polyamide-imide) resin | 30 |
| N-methyl pyrrolidone | 230 |
| Xylene | 0 - 10 |
| Pigment (mineral or carbon black) | 0 - 25 |
| Aluminium flakes | 0 - 40 |
| PPS (polyphenylene sulphide) | 0 - 80 |

7. A method according to claim 5 or 6, characterised in that the undercoat contains aluminium flakes having dimensions less than or equal to 25 microns.

8. A method according to any one of claims 1 to 7, characterised in that the undercoat is applied to aluminium which has not undergone chemical or physical treatment other than degreasing.

9. A method according to any one of claims 1 to 8, characterised in that the primary coat and the top finishing coat are applied by screen printing or roller coating.

10. A method according to claim 9, characterised in that the primary coat and the top finishing coat also contain a thickener.

## Patentansprüche

1. Verfahren zur Ausbildung einer Antihaftbeschichtung auf einem Küchengerät aus Aluminium, wobei die Beschichtung eine direkt auf das Aluminium aufgebrachte Unterschicht, eine auf diese Unterschicht aufgebrachte Grundschicht und eine auf die Grundschicht aufgebrachte obere Deckschicht umfaßt, wobei die Grundschicht aus einer wäßrigen, mit Polyamidimid (PAI)-Harz und Tretrafluorethylen-Copolymer und Propylvenylehter (PFA) angereicherten Dispersion aus Polytetrafluorethylen (PTFE) erhalten wird und wobei die obere Deckschicht aus einer wäßrigen PTFE-Dispersion erhalten wird, dadurch gekennzeichnet, daß die Unterschicht unter Aufbringung einer Lösung von Polyamidimid (PAI)-Harz in einem organischen Lösungsmittel hergestellt wird.

2. Verfahren nach Anspruch 1, dadurch gekennzeichnet, daß die Unterschicht aus einer Lösung von Polyamidimid (PAI)-Harz und Polyvenylensulfid hergestellt wird.

3. Verfahren nach einem der Ansprüche 1 und 2, dadurch gekennzeichnet, daß das organische Lösungsmittel aus den folgenden Verbindungen ausgewählt wird: N-Methyl-pyrrolidon (NMP), Dimethylformamid (DMF) oder NMP/Xylol- oder DMF/Xylol-Mischung.

4. Verfahren nach einem der Ansprüche 1 bis 3,dadurch gekennzeichnet, daß die Unterschicht weiterhin Inert-Füllstoffe enthält.

5. Verfahren nach Anspruch 4, dadurch gekennzeichnet, daß die inerten Füllstoffe ausgewählt werden aus mineralischen Pigmenten, Metallkörnchen, Tonerde und Quarz.

6. Verfahren nach einem der Ansprüche 1 bis 5, dadurch gekennzeichnet, daß die Zusammensetzung der Unterschicht, ausgedrückt in Gewichtsanteilen, wie folgt ist:
- trockenes PAI(Polyamidimid)-Harz 30
- N-Methyl-pyrrolidon 230
- Xylol 0-10
- (mineralisches oder Ruß-)Pigment 0-25
- Aluminiumkörnchen 0-40
- PPS (Polyphenylensulfid) 0-80

7. Verfahren nach einem der Ansprüche 5 und 6, dadurch gekennzeichnet, daß die Unterschicht Aluminiumkörnchen mit einer Größe von kleiner oder gleich 25 µm enthält.

8. Verfahren nach einem der Ansprüche 1 bis 7, dadurch gekennzeichnet, daß die Unterschicht auf Aluminium aufgebracht wird, welches außer einer Entfettung keiner chemischen oder physikalischen Behandlung unterzogen worden ist.

9. Verfahren nach einem der Ansprüche 1 bis 8, dadurch gekennzeichnet, daß die Grundschicht und die obere Deckschicht durch Siebdruck oder Walzbeschichten (Walzlackierung) aufgebracht werden.

10. Verfahren nach Anspruch 9, dadurch gekennzeichnet, daß die Grundschicht und die obere Deckschicht weiterhin ein Eindickmittel enthalten.
